# EUROPEAN PATENT APPLICATION

(11) **EP 2 874 072 A1**
(43) Date of publication of application: **20.05.2015**
(21) Application number: 13192736.0
(22) Date of filing: 13.11.2013
(51) Int. Cl.: G06F 17/30

(54) **Streaming weather animation**

(71) Applicant: Kona Limited, London NW1 9UB (GB)
(72) Inventor: The designation of the inventor has not yet been filed
(74) Representative: South, Nicholas Geoffrey

(57) **Abstract**

Embodiments described herein provide a computer implemented method, comprising: retrieving the a first dataset from a database, wherein the first dataset represents the value of one or more parameters at a series of spatially and/or temporally distinct locations; calculating, at the server, a secondary dataset based on the first dataset by mapping each data point in the first dataset onto a scale, the scale having a plurality of values; requesting a first dataset from a server over a network, wherein the first dataset represents the value of one or more parameters at a series of spatially and/or temporally distinct locations; transmitting the secondary dataset from the server to a client device; processing the secondary dataset on the client device; and displaying the processed secondary dataset on a display of the client device. In some embodiments the data is meteorological data and the parameters are any combination of air temperature, air pressure, precipitation level and wind speed. In some embodiments the secondary dataset is displayed as a streaming weather animation.

## Description

### FIELD OF THE INVENTION

The present invention relates to data processing, and more specifically the processing of data representing one or more spatially and/or temporally distributed parameters.

### BACKGROUND

It is often desirable with spatially distributed datasets to be able to provide a representation of the dataset that is readily interpretable by a user. It is also often desirable with temporally distributed datasets to be able to show the time evolution of the data in a form that is readily interpretable by a user. In the case of meteorological data, this could correspond to a weather forecast that is clear to a user by, for example, transitioning smoothly between adjacent time steps.

However, in many cases with datasets of this type, the data is not provided in a form that is readily suitable for such goals. In the case of meteorological data, a data gathering organisation such as the UK's Met Office may provide meteorological data which has large spatial and/or temporal separation between adjacent data points. For example, adjacent data points may be separated by distances of more than 100 km, or times of more than 3 hours. The resolution of this data is therefore too low to provide a representation that is readily and meaningfully interpretable by a user. Additional processing of the data before presenting it to the user is therefore required. This additional processing is costly in terms of processing resources.

The ever-increasing popularity of relatively low-resource data processing devices such as personal computers, smartphones and tablet computers means that processing resources are often scarce. This in turn means that the required additional processing often cannot be carried out satisfactorily on the user's data processing device. It is also not always possible to carry out the required additional processing on a higher resource data processing device, since users now expect to be able to access representations such as weather forecasts whenever and wherever they wish, often over relatively low bitrate channels that cannot support transfer of large amounts of data. Even in the case where a relatively high bitrate channel is available, it may still be desirable to limit the amount of data transferred over the channel, since in some cases a user is being charged according to the amount of data they transfer over the channel.

Therefore, a need exists for systems and methods that are able to provide a user with a readily intelligible dataset representation that does not require significant client-side processing resources to generate and that does not require large amounts of data to be transmitted over a network.

### BRIEF SUMMARY OF THE INVENTION

In one aspect, the invention sets out a computer implemented method, comprising: retrieving the a first dataset from a database, wherein the first dataset represents the value of one or more parameters at a series of spatially and/or temporally distinct locations; calculating, at the server, a secondary dataset based on the first dataset by mapping each data point in the first dataset onto a scale, the scale having a plurality of values; requesting a first dataset from a server over a network, wherein the first dataset represents the value of one or more parameters at a series of spatially and/or temporally distinct locations; transmitting the secondary dataset from the server to a client device; processing the secondary dataset on the client device; and displaying the processed secondary dataset on a display of the client device.

In another aspect, the invention sets out a system, comprising: a client device; a server; and a database; wherein the client device is configured to: request a first dataset from the server over a network, wherein the first dataset represents data representing the value of one or more parameters at a series of spatially and/or temporally distinct locations; receive a secondary dataset from the server; process the secondary dataset; and display the processed secondary dataset on a display; and wherein the server is configured to: retrieve the a first dataset from a database; calculate the secondary dataset based on the first dataset by mapping each data point in the first dataset onto a scale, the scale having a plurality of values; receive the request from the client device; and transmit the secondary dataset to the client device.

In yet another aspect, the invention sets out a computer program product comprising: a computer readable storage medium readable by a processing circuit and storing instructions for execution by the processing circuit for performing a method according to any of the embodiments set out herein.

### BRIEF DESCRIPTION OF THE DRAWINGS

Preferred embodiments of the present invention will now be described, by way of example only, with reference to the following drawings in which:
Fig. 1 is a schematic diagram of components that form a system according to embodiments described herein;
Fig. 2 is a flow diagram showing the operation of the system of Fig. 1;
Fig. 3 is flow diagram showing a process that is part of step 210 of Fig. 2;
Fig. 4 is a flow diagram showing the operation of the system of Fig. 1 to produce a streaming weather animation; and
Fig. 5 shows a method according to embodiments described herein by which a processing load may be reduced in a repainting process.

### DETAILED DESCRIPTION OF THE EMBODIMENTS

Embodiments are described below in detail primarily in connection with meteorological data. However, embodiments have application with any data set where processing of the data is required to generate a representation of the data that is suitable for presentation to a user. Examples of such data sets include Ordnance Survey (OS) data and oceanographic data sets.

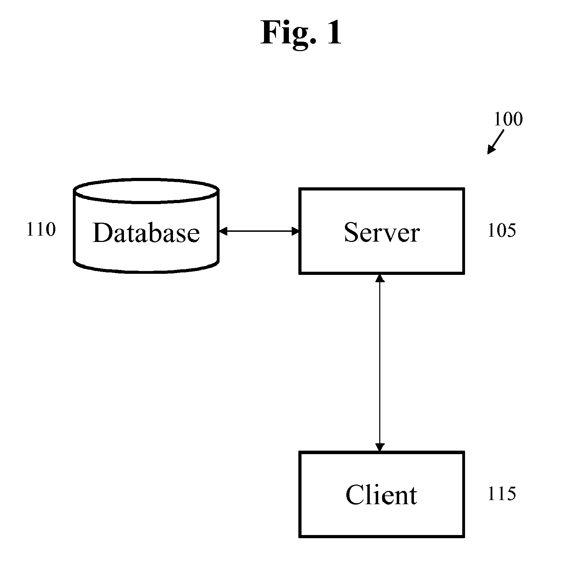

Turning now to the Figures, Fig. 1 is a schematic diagram of a system according to embodiments described herein. System 100 includes a server 105, database 110 and a client 115. As used herein, the terms 'server', 'client' and 'database' take their usual meaning as understood by one skilled in the art of computing. Server 105 is in two-way communication with both database 110 and client 115, as shown by the arrows in Fig. 1. Communication links between the components of system 100 may be provided by any combination of wired and wireless networking components known in the art. It will be appreciated that server 105 may be a single data processing device or a plurality of data processing devices that are connected in a network.

In some embodiments database 110 is part of server 105, in others database 110 is separate from server 105. Database 110 may be a distributed database. Client 115 may communicate with server 105 via a public network such as the Internet, via a private network, or via a combination of both public and private networks. System 100 may include further components such as routers or switches (not shown) to facilitate communication between the various components, as are well known to a person skilled in the art of network communications. Client 115 may be any data processing device. In many embodiments client 115 is an end-user data processing device such as a personal computer, mobile telephone, smartphone, laptop computer, tablet computer, personal digital assistant (PDA), chartplotter and the like. The resources of such end-user data processing devices, and in particular the processing and memory resources, may be limited. In some embodiments client 115 is a portable end-user data processing device such as a mobile telephone, smartphone, laptop computer, tablet computer, personal digital assistant (PDA), chartplotter and the like. The resources of such portable data processing devices, and in particular the processing and memory resources, may be particularly limited. Client 115 may include a display, memory and a processor. System 100 may include one or more servers, one or more clients and/or one or more databases.

Database 110 stores one or more datasets. The datasets may comprise raw (unprocessed) data, processed data or a combination of the two. In some embodiments the datasets are stored in Gridded Binary (GRIB) format, which is known to those in the art. This format is sometimes alternatively referred to as General Regularly-distributed Information in Binary format.

In some embodiments the datasets each contain data that represents the value of each of one or more parameters at a series of spatially and/or temporally distinct locations. Examples of data of this type include meteorological data, oceanographic data and Ordnance Survey (OS) data. In the case of meteorological data, each data point corresponds to a particular geographical location (longitude, latitude), vertical height and time and provides the value of one or more meteorological parameters such as wind speed, temperature, precipitation level etc. at that location and time. Each data point may additionally include information relating to the units of the parameter(s) that it represents.

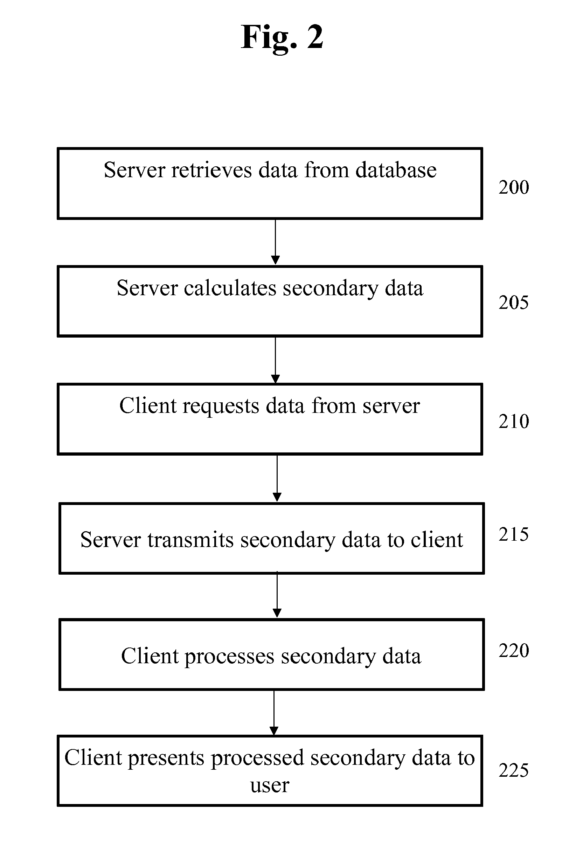

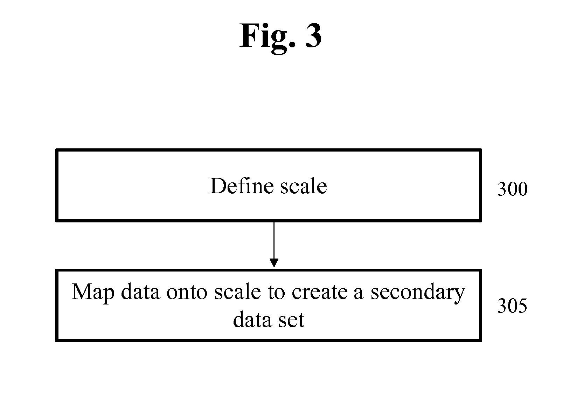

In some embodiments, system 100 operates according to the flow diagram of Fig. 2. In step 200, server 105 interrogates database 110 and retrieves relevant data. Once the data has been retrieved, in step 205 server 105 analyses the data and calculates appropriate secondary data. Further details regarding the process for calculating secondary data are provided later in this specification in connection with Fig. 3. In step 201, client 115 sends a request for data to server 105. The request may include an identifier that specifies the data that is required by client 115. Where database 100 stores meteorological data, the identifier may specify data corresponding to a particular geographical location, particular time or range of times, and/or one or more parameters of interest. For example, client 115 may request data regarding the precipitation level of a region corresponding to a particular longitude and latitude. Client 115 may further specify that the data relates to a particular time and date, e.g. 13:00 on 1 January 2013. Other parameters such as air temperature, wind speed, precipitation level and air pressure may additionally or alternatively be specified. It will be appreciated that a single request may specify one or more parameters.

Server 105 receives the request for data and, in step 215, server 105 transmits the secondary data to client 115 that corresponds to client's request for data made in step 210. Client 115 then processes the secondary data in step 220 and in step 225 client 115 presents the processed secondary data to a user. The processing step may include an interpolation operation. The presentation may involve providing a visual representation of the processed secondary data on a display. In some embodiments the representation is an animation. Steps 200 to 225 may be repeated a plurality of times to accommodate multiple data requests from client 115. Client 115 only need make a request for additional data from server 105 when a user wishes to view a new subset of the data, perhaps corresponding to a different spatial or temporal location, or a different parameter. Thus, embodiments enable the data to be read as streaming data by client 115.

In the embodiments of Fig. 2 server 105 calculates and stores the secondary data before client 115 requests it, so that the secondary data is available for immediate download when requested by client 115. However, in alternative embodiments, server 105 calculates the secondary data only once it has been requested by client 115. In these alternative embodiments server 105 may only retrieve the portion of the data that corresponds to the data requested by client 115. Server 105 may additionally or alternatively only calculate a portion of the secondary dataset, where that portion may correspond to the region of the original dataset that was requested by client 115.

Referring now to Fig. 3, a process by which server 105 may calculate the secondary data is as follows.

Firstly, in step 300, a scale is determined that includes a plurality of values. Preferably each value can be uniquely identified by a user when the scale is presented in a visual form, possibly with the assistance of an accompanying legend or key. In some embodiments the scale may be pre-defined for a particular parameter, and in such cases the determination may involve retrieving the corresponding pre-defined scale from a database which may or may not be database 100. The definition of the scale may be based on information from an independent body, such as the Met Office. In other embodiments server 105 may determine the scale. In still other embodiments client 115 may determine the scale and transmit it to server 105 in advance of or in conjunction with a request for data.

Preferably the scale is chosen such that each value on the scale can be represented using only a small number of bits, and more preferably using fewer bits than are required to represent an integral or floating point value. The scale may also be chosen based on the maximum and minimum values of a parameter in the data set retrieved in step 205 and/or information from client 115. The determination of the scale may alternatively or additionally be based on considerations such as the differential threshold of the user and/or the content of the original dataset.

In embodiments where the scale is a pre-defined scale, it may be necessary to create additional intermediate values between the values of the pre-defined scale to ensure that results suitable for display are obtained after interpolation of the secondary data in step 220 (described later). If intermediate values are required, these may be created using interpolation.

In some embodiments, the scale is a colour level scale having values defined by a set of different colour levels. The colour level scale may be a reduced length colour level scale, in the sense that it does not include the full set of colour levels that are defined in a standard colour scale such as the RGB colour scale. In some of these embodiments, in which the original data is meteorological data, each colour level corresponds to a range of precipitation values. Other embodiments use a colour level scale that corresponds to a range of temperature values or air pressure values. Other parameters may be similarly represented.

It will be appreciated that reduced length colour level scales having any number of levels are within the scope of embodiments described herein. For example, embodiments using reduced length colour level scales having 32, 64 or 128 colour levels are contemplated. The number of bits required to represent a colour level scale increases with the number of levels defined by the scale. Preferably the length of the colour level scale is chosen such that the number of bits required to represent a level is minimal, but also such that the difference between adjacent levels on the scale is not so great as to cause an unsatisfactory result when interpolation is carried out.

In one particular reduced length colour level embodiment eight colour levels are initially defined, perhaps corresponding to the colours used by the Met Office on its 'rainfall radar' colour scale. The number of bits required to represent this initial 8 level colour scale is low, but the eight pre-defined levels will not produce results suitable for display once client 115 has carried out interpolation step 220 because the difference between each colour level is too large compared to the differential threshold of the user. To remedy this problem three intermediate colour levels are defined for each original colour level to create a reduced length colour level scale having 32 colour levels in total. The intermediate colour levels may be determined by interpolating the eight pre-defined levels. The final 32 level scale allows the precipitation level to be conveyed in visual form to a user.

Each colour level can be represented using only between 5 and 7 bits, depending on the length of the colour scale and data type that is used. This is significantly less than the 32 bits needed to represent a floating point value and the 10 to 16 bits needed to represent an integral value. This means that the total number of bits that server 105 transmits to client 115 in step 215 is reduced by a factor of around two to six compared to the case where server 105 simply transmits the original data. The reduced representation means that it also requires less memory to store and manipulate the secondary data, which is advantageous given that client 115 will often have limited processing and memory resources available.

Once the scale has been determined, in step 305 a secondary data set is created. The secondary data set is created by mapping each data point from the original data set onto the scale. The secondary data set then comprises a set of values on the scale, with each data point in the secondary data set corresponding to a data point from the original data set.

The mapping may involve determining a value on the scale that is numerically closest to the value of a parameter of the original data point. For example, in the context of the precipitation level embodiment introduced earlier, the scale may be defined over the range 0 mm/day to 10 mm/day, in 1mm/day increments. Each increment has an associated colour level. A data point from the original data set having a precipitation value of 3.2 mm/day would then generate a corresponding data point in the secondary data set that has the colour level that corresponds to the range 2.5 mm/day to 3.5 mm/day.

In cases where server 105 transmits data over a network that employs data compression, the reduction in the number of bits that need to be transmitted may be even greater than the two to six factor noted earlier. In the case of the Internet, web servers usually apply compression to outgoing traffic, often based on the gzip or deflate compression algorithms. It will be appreciated that compression algorithms such as lossless JPEG2000 and others that are known to the skilled person may be used instead of gzip or deflate. A larger data compression ratio is typically achieved for the secondary data set than can be achieved for the original data set, due to the smoothing of the data which occurs during the mapping process. This further reduces the number of bits that server 105 needs to transmit to client 115. This advantage is realised for embodiments described herein because, in general, the secondary data can be compressed more effectively than the original data regardless of the compression algorithm that is used.

As mentioned earlier, in some embodiments the client processing of the secondary data in step 220 includes an interpolation operation. This interpolation operation may be performed more quickly on the secondary data than on the original data, due to the short representation of the secondary data compared with the representation of the original data. In addition, the interpolation operation may use less memory than if it were performed on the original data.

In some embodiments the interpolation operation is bicubic interpolation. Bicubic interpolation algorithms involve multiplying data points by a set of coefficients. These coefficients are typically non-integral, meaning that a floating point representation is required for the coefficients to avoid loss of precision. For example, in one particular embodiment the coefficients are 0.25, 0.50, 0.75, 1.25, 1.50, 2.25, 2.50, 3.75 and 6.25, each of which requires a floating point representation. Multiplicative operations involving floating point representations are often slower than multiplicative operations involving data having a reduced representation, such as an integral representation. This is particularly the case when using interpreted programming languages such as JavaScript.

In the context of embodiments described herein client 115 is processing secondary data having a reduced representation, meaning that no loss of precision will occur if the interpolation coefficients also have a corresponding reduced representation. One way to obtain a reduced representation for the coefficients is to multiply each coefficient by the lowest number that will cause each coefficient in the set to become an integer. For example, in the embodiment having coefficients of 0.25, 0.50, 0.75, 1.25, 1.50, 2.25, 2.50, 3.75 and 6.25, multiplying each coefficient by 4 will result in the set of integers 1, 2, 3, 5, 6, 9, 10, 15 and 25, all of which can be stored in a reduced representation. In some embodiments client 115 carries out this operation on the interpolation coefficients before interpolating the secondary data, resulting in a further reduction in the amount of processing resources required to process the secondary data. Less memory may be used to carry out this operation and additionally, because the processor of client 115 is only presented with an integer instruction set as opposed to an instruction set containing floating point instructions, less processor time is required to perform the interpolation operation.

It will be appreciated that the above can be applied equally to other interpolation algorithms that involve multiplying data points by a set of coefficients.

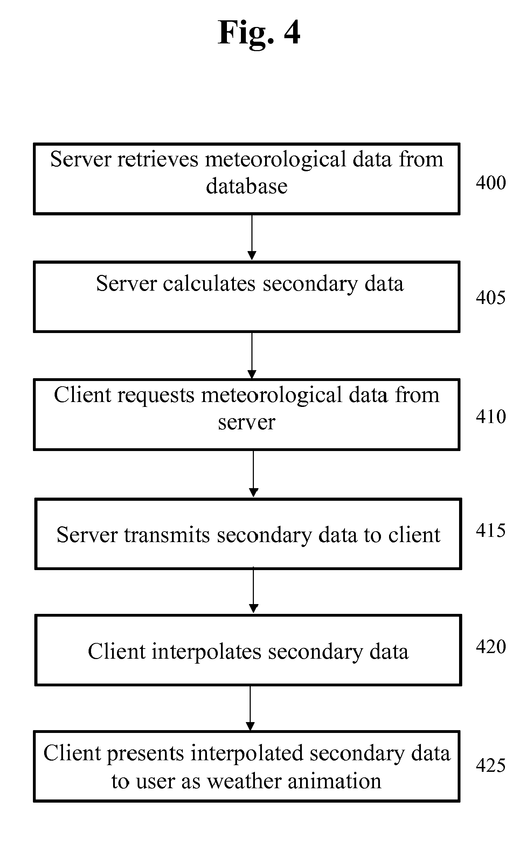

Embodiments described herein have application in weather forecasting, and in particular in providing a web-based solution that is able to display weather dynamics in a manner similar to streaming video (hereafter 'streaming weather animation') on a client device such as client 115. Fig. 4 shows a process according to some embodiments that may be carried out by system 100 in order to provide streaming weather animation on a client device such as client 115.

In step 400 server 105 retrieves meteorological data, which may be encoded in GRIB format, and in step 405 server 105 calculates a secondary data set corresponding to the precipitation parameter (or other meteorological parameter) contained in the retrieved meteorological data. The scale for the secondary data set is the reduced length colour level scale described earlier, and server 105 calculates the secondary data set according to the steps of Fig. 3.

In step 410 client 115 requests meteorological data from server 105. In these embodiments the request is performed using a web-based application written in JavaScript, although it will be appreciated that other programming languages may be used. It will also be appreciated that client 115 may alternatively send a request for data to server 105 using a mobile application of the type designed to run on portable data processing devices such as smartphones, tablet computers etc., or using a 'traditional' software application designed to run on e.g. a personal computer.

It will be appreciated that, in alterative embodiments, step 410 may precede steps 400 and 405. In these alternative embodiments server 105 may only retrieve the portion of the meteorological data that corresponds to the data requested by client 115. Server 105 may additionally or alternatively only calculate a portion of the secondary dataset, where that portion may correspond to the region of the original dataset that was requested by client 115.

Server 105 then transmits the secondary data to client 115 in step 415 and in step 420 client 115 performs interpolation on the secondary data. In some embodiments the interpolation is bicubic interpolation using integer interpolation coefficients. Client 115 then displays the interpolated secondary data to the user as a weather animation. This is achieved because the interpolation of the secondary data produces a resulting dataset for display that is equivalent to performing spatial and temporal interpolation on the original precipitation data in terms of information content presented to the user. Specifically, the resulting dataset displayed by client 115 is able to show rainfall over some area of the Earth and smoothly show how this rainfall changes in time. This dynamic weather animation is made possible due to the various aspects of the invention, which operate to reduce delays in the retrieval of data from server 105 by reducing the number of bits that need to be transmitted and also to reduce the processing resources required by client 115 to perform an interpolation operation of the retrieved data. The result is a continuous video-like streaming weather animation that smoothly shows temporal dynamics of a weather system and that allows dynamic interpolation of spatial maps to be performed by client 115.

Prior art systems typically operate by creating a set of ready-to-use images server-side and then transmitting them to a client for display when the client requests data. The ready-to-use images are created in advance of a request for data. These prior art systems often suffer from loss of resolution when a user performs a zoom operation. This is because the ready-to-use set of images are not high enough resolution to remain smooth when they are zoomed. It is not always possible to prepare and transmit higher resolution ready-to-use images because of limitations on server-side processing resources and/or data transmission rates.

In contrast, there is no loss of resolution when a zoom operation is carried out on the streaming weather animation according to embodiments described herein. This is because the frames of the animation are drawn locally by client 115 using interpolation (step 420). This means client 115 need only request additional data from server 105 when the user wishes to view a new area, parameter or time window. Thus, a true streaming-type animation is achieved by embodiments described herein, meaning a user can request weather data for any area or parameter and view a smooth, scalable weather animation without significant delay.

Various embodiments described herein include a step of presenting processed secondary data to a user. This may include displaying the processed secondary data on a display screen, possibly as an animation. In embodiments where an animation is presented to a user, there is a need to provide sufficient frames such that the animation appears smooth. For example, 60 frames are required for each second of a 60 frame-per-second animation.

Each second of animation will represent some 'real world timestep' in the units of the parameter(s) that are being displayed in the animation. The processed secondary data produced in step 220 of Fig. 2 or step 420 of Fig. 4 will encode this change, where in particular consecutive temporal locations in the processed secondary data correspond to the beginning and end of a real world timestep. Hereafter, temporal locations in the processed secondary data will be referred to as 'primary frames'.

For example, in embodiments where the animation shows precipitation levels, the real world timestep may be one hour; that is, one second of the animation shows changes in precipitation that take place over one hour. In this instance, consecutive primary frames of the secondary data will correspond to precipitation levels at the beginning of a given hour, and at the end of the hour.

It will be appreciated that the primary frames alone are not always sufficient to display a smooth animation for the user, since the timestep between consecutive primary frames could be of the order of seconds, not the milliseconds required to produce smooth animation. To provide a smooth animation, intermediate frames can be generated based on the primary frames and displayed between consecutive primary frames. Display of each of these intermediate frames requires the display to be repainted.

Modern display devices have high resolution displays; e.g. a full-HD display a screen resolution of 1920 x 1080 pixels, corresponding to a little over 2 megapixels in total. Repainting the display by updating the colour level of each of these pixels for each intermediate frame is costly in terms of processor and memory usage, and is therefore undesirable. It is particularly undesirable in embodiments where client 115 is a data processing device having limited or reduced processing resources, such as embodiments where client 115 is a portable device.

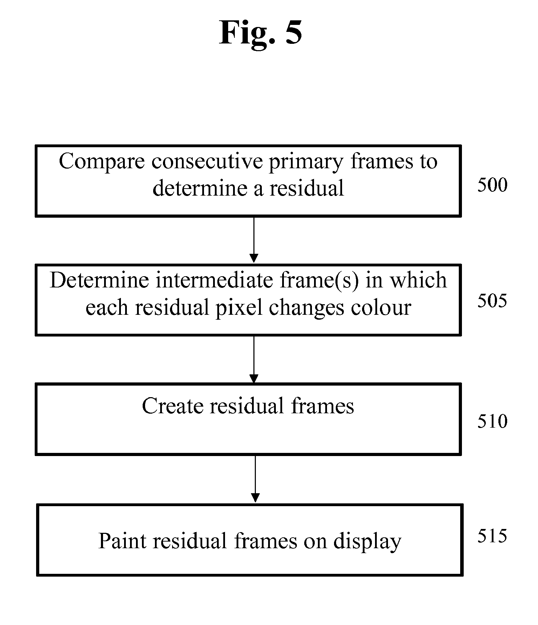

Fig. 5 shows a method according to embodiments described herein by which the processing load may be reduced in the repainting process. This method may be carried out as part of processing step 220 of Fig. 2 or interpolation step 420 of Fig. 4, or it may be carried out separately after these steps. The method may be carried out by client 115.

In step 500, the method compares consecutive primary frames to determine a residual. In some embodiments consecutive primary frames are subtracted from one another, where the remainder of this subtraction is the residual. The residual identifies the pixels that have changed colour in the transition from one primary frame to the next (hereafter 'residual pixels'). In some embodiments the residual may be zero for pixels that have not changed colour between consecutive primary frames, and non-zero for residual pixels that have changed colour.

It has been found that in some cases perhaps only 150,000 residual pixels exist, out of a possible 2 million pixels that make up a display. However, it is still costly in terms of processor time to calculate the colour of each of these 150,000 residual pixels for each intermediate frame. Instead, in step 505, the method determines, for each residual pixel, the time relative to the earlier primary frame at which the residual pixel changes colour; i.e. in which intermediate frame(s) the residual pixel changes colour. It will be appreciated that some residual pixels may change colour more than once between a given pair of consecutive primary frames.

The method then proceeds to step 510, in which a set of residual frames are created. These take the place of intermediate frames, so a 60 frame-per-second animation will contain 58 residual frames (2 primary frames plus 58 residual frames for a total of 60 frames). Each residual frame identifies only the residual pixels that need to chance colour in that particular frame. The painting process of step 515 therefore involves far fewer calculations than if a prior art method were used to paint to the display, resulting in significant savings in computing resources. The method of Fig. 5 may therefore be advantageously used with any of the embodiments described herein to further reduce processing load on client 115.

In addition to the embodiments described in detail herein, the skilled person will recognize that various features described herein can be modified and combined with additional features, and that the resulting additional embodiments are also within the scope of the invention. The skilled person will also appreciate that embodiments described herein may be encoded on a computer readable storage medium as a computer program product, for execution by one or more data processing devices.

## Claims

1. A computer implemented method, comprising:
retrieving a first dataset from a database, wherein the first dataset represents the value of one or more parameters at a series of spatially and/or temporally distinct locations;
calculating, at a server, a secondary dataset based on the first dataset by mapping each data point in the first dataset onto a scale, the scale having a plurality of values;
transmitting the secondary dataset from the server to a client device;
processing the secondary dataset on the client device; and
displaying the processed secondary dataset on a display of the client device.

2. The computer implemented method of claim 1, wherein each data point of the secondary dataset is stored in a reduced representation.

3. The computer implemented method of claim 1 or claim 2, wherein a data point in the first dataset is mapped to whichever value of the scale is closest in value to the value of one of the parameters represented by the data point.

4. The computer implemented method of any preceding claim, wherein the processing step comprises applying one or more interpolation algorithms to the secondary dataset.

5. The computer implemented method of claim 4, wherein the interpolation algorithm is a bicubic interpolation algorithm having integer interpolation coefficients, and wherein the interpolation coefficients are calculated by multiplying a set of initial interpolation coefficients by the lowest number that will cause each coefficient in the set to become an integer.

6. The computer implemented method of any preceding claim, wherein the scale is a reduced length colour level scale.

7. The computer implemented method of any preceding claim, wherein the client device is an end-user data processing device.

8. The computer implemented method of any preceding claim, wherein the first dataset is one of meteorological data, ordnance survey data and oceanographic data and wherein the one or more parameters are any combination of air temperature, air pressure, precipitation level and wind speed.

9. The computer implemented method of any preceding claim, wherein the processed secondary dataset is displayed as a streaming weather animation.

10. The computer implemented method of any preceding claim, further including:
determining a series of primary frames, each primary frame corresponding to a distinct temporal location in the secondary dataset;
determining a set of residual frames by subtracting consecutive primary frames from one another, wherein the residual frames correspond to temporal locations intermediate those of the consecutive primary frames; and
displaying the residual frames on the display.

11. A computer program product comprising: a computer readable storage medium readable by a processing circuit and storing instructions for execution by the processing circuit for performing a method according to any of claims 1 to 10.

12. A system, comprising:
a client device;
a server; and
a database;
wherein the client device is configured to:
request data representing the value of one or more parameters at a series of spatially and/or temporally distinct locations;
receive a secondary dataset from the server;
process the secondary dataset; and
display the processed secondary dataset on a display; and
wherein the server is configured to:
retrieve a first dataset from a database;
calculate the secondary dataset based on the first dataset by mapping each data point in the first dataset onto a scale, the scale having a plurality of values;
receive the request from the client device; and
transmit the secondary dataset to the client device.

13. The system of claim 12, wherein the client device is an end-user data processing device.

14. The system of claim 12 or 13, wherein the processed secondary dataset is displayed as a streaming weather animation.

15. The system of any one of claims 12 to 14, wherein the client device is further configured to:
determine a series of primary frames, each primary frame corresponding to a distinct temporal location in the secondary dataset;
determine a set of residual frames by subtracting consecutive primary frames from one another, wherein the residual frames correspond to temporal locations intermediate those of the consecutive primary frames; and
display the residual frames on the display.
